**Europäisches Patentamt**

**European Patent Office**

**Office européen des brevets**

(11) Veröffentlichungsnummer: **0 310 553**
**A1**

## (12) EUROPÄISCHE PATENTANMELDUNG

(21) Anmeldenummer: **88810644.0**

(22) Anmeldetag: **21.09.88**

(51) Int. Cl.4: **C 01 F 7/46**
**B 01 D 13/02**

(30) Priorität: **01.10.87 CH 3817/87**

(43) Veröffentlichungstag der Anmeldung:
**05.04.89 Patentblatt 89/14**

(84) Benannte Vertragsstaaten:
**DE ES FR GB GR IT**

(71) Anmelder: **SCHWEIZERISCHE ALUMINIUM AG**
**CH-3965 Chippis (CH)**

(72) Erfinder: **Brown, Gregory P.**
**Banyan Street 13**
**Nhulunbuy, N.T. 5797 (AU)**

**Tschamper, Otto**
**Buchenweg 10**
**CH-8604 Volketswil (CH)**

(54) **Verfahren zur Verringerung von Verunreinigungen in Laugen beim Bayer-Prozess.**

(57) Bei Verfahren zur Verringerung der gelösten anorganischen und organischen Verunreinigungen in wässrigen Laugen beim Bayer-Prozess zur Herstellung von Aluminiumhydroxid werden Zusätze verwendet, die aufwendige Verfahrensführungen und einen erhöhten Laugenverbrauch notwendig machen, was die Produktionskosten in die Höhe treibt und nicht in jedem Fall eine gute Produktqualität gewährleistet.

Diese Nachteile können verhindert werden, wenn die verunreinigte Lauge $P_v$ eine Elektrodialyse unter Verwendung von mindestens einer anionen- und/oder mindestens einer kationenpermselektiven Membran und mindestens einer bipolaren, das Wasser dissozierenden Membran unter Bildung einer Alkalilaugenkomponente $P_r$, welche der Kreislauflauge des Bayer-Prozesses zugeschlagen wird, und einer Verunreinigungskomponente $V$, welche aus dem Prozess entfernt und verworfen wird, unterworfen wird.

Fig. 2

EP 0 310 553 A1

Beschreibung

## Verfahren zur Verringerung von Verunreinigungen in Laugen beim Bayer-Prozess

Die Erfindung betrifft ein Verfahren zur Verringerung der gelösten anorganischen und organischen Verunreinigungen in wässrigen Laugen beim Bayer-Prozess zur Herstellung von Aluminiumhydroxid.

Die beim Bayer-Prozess verwendeten Rohstoffe, im wesentlichen Bauxit und Natronlauge, enthalten organische und anorganische unerwünschte Substanzen, welche insbesondere während der Auflösung des Bauxits in den Bayer-Prozess eingeführt werden und in der Folge in vielfältiger Weise diesen nachteilig beeinflussen. Die Substanzen sind saure Verbindungen wie z.B. Chloride, Phosphate, Sulfate, Vanadate, Fluoride und/oder organische Salze oder Säuren, insbesondere Oxalate und Huminsäuren.

Da die Alkalilauge im Bayer-Prozess in verschiedenen Stufen auf verschieden hohen Konzentrationen im Kreislauf geführt wird, reichern sich die Verunreinigungen an verschiedenen Stellen bis zu kritischen Werten an, sofern sie nicht aus dem Prozess genommen werden. Mit den Verunreinigungen sind verfahrenstechnische als auch wirtschaftliche Probleme verbunden. Kumulativ angereichert führen sie, da sie in Form von Natriumsalzen anfallen, zu einer Reduktion der Kaustizität und des Anteils an freier Lauge, was zur Folge hat, dass die Laugenproduktivität und damit die Prozesswirtschaftlichkeit sinkt. Ferner wird die Prozessführung durch Ablagerungen der unerwünschten Stoffe an Tanks, Rohren, Wärmetauschern und sonstigen Einrichtungen behindert, so dass Reinigungsschritte durchgeführt werden müssen, um die vorgesehene Produktionsleistung wieder herzustellen. Unter Umständen können die Reinigungsschritte recht aufwendig sein, z.B. indem Säurespülungen durchgeführt werden müssen, wenn die Ablagerungen Schichtdicken erreichen, die mit mechanischen Mitteln nur unzulänglich entfernt werden können oder die Ablagerungen sich an unzugänglichen Orten befinden.

Die Prozesswirtschaftlichkeit wird ferner durch die Verunreinigungen dadurch reduziert, dass diese die Laugenviskosität erhöhen und damit die Pumpkosten steigen. Zusätzlich wird der Absetzvorgang des Hydroxids und auch des Rotschlamms und deren Abtrennung negativ beeinflusst.

Neben den oben genannten, allen Verunreinigungen gemeinsam anzulastenden Nachteilen gibt es noch eine Vielzahl weiterer Nachteile, die einzelnen Verunreinigungen zugewiesen werden. So färben die organischen Verunreinigungen, meist in Form von langkettigen Huminsäuren oder deren Derivate bzw. Reaktionsprodukte, das Aluminiumhydroxid gräulich ein. Von besonderer Bedeutung ist das während der Zersetzungsphase des Bauxits durch Lösen und Zersetzung von Humin- und anderen organischen Säuren gebildete Oxalat. Dies kann sich bis zur Uebersättigung anreichern und beim Ausscheiden die Prozesswirtschaftlichkeit negativ beeinflussen, indem es die Kristallisation des Aluminiumhydrats erschwert und zusätzlich nachteiligen Einfluss auf die physikalischen Eigenschaften der Kristallagglomerate ausübt.

Zur Veränderung kritischer Schwellenwerte der Verunreinigungen und zur Kontrolle ihrer Konzentrationen in den im Kreislauf geführten Laugen sind eine Vielzahl von Verfahren bekannt. Nach der US-PS 4 335 082 werden die Prozesslaugen mit Natriumhypochlorit oder anderen Oxidationsmitteln behandelt, um die organischen Stoffe zu zersetzen. In der DE-OS 2 415 872 wird die Zugabe von Kalziumverbindungen vorgeschlagen, um die Huminsäuren als unlösliche Kalziumverbindungen zu fällen. In ähnlicher Weise werden nach den US-PS'en 4 046 855 und 4 101 629 Fällungsreaktionen mit Magnesium- bzw. Bariumverbindungen vorgeschlagen. Die letztgenannten Verfahren können auch zur Oxalatentfernung eingesetzt werden, da die Lauge destabilisiert ist, wenn die Huminstoffe entfernt sind und dadurch das Oxalat als Natriumoxalat ausfällt. Zur Oxalatentfernung wurde ferner nach der US-PS 3 649 185 eine Erhöhung der Laugenkonzentration durch weiteren Zusatz von kaustischer Soda vorgeschlagen, wodurch das Oxalat ausfällt. In analoger Weise können auch die anorganischen Verunreinigungen ausgesalzt werden. Die Aussalzung durch Verdampfungskristallisation wurde ebenfalls früher angewendet und hat heute nur noch historische Bedeutung.

Die vorgeschlagenen Verfahren sind relativ aufwendig in der Verfahrensführung, verwenden teure Zusätze oder machen einen erhöhten Laugenverbrauch notwendig, was in jedem Fall die Produktionskosten in die Höhe treibt und nicht in jedem Fall eine gute Produktqualität gewährleistet.

Die Erfinder haben sich daher die Aufgabe gestellt, ein Verfahren vorzulegen, welches geeignet ist, die anorganischen und organischen gelösten Verunreinigungen in wässrigen Laugen beim Bayer-Prozess zur Herstellung von Aluminiumhydroxid in wirtschaftlicher Weise zu verringern und deren Konzentrationen in derart geringen Grenzen zu halten, dass sie praktisch ohne Einfluss auf den Bayer-Prozess sind.

Erfindungsgemäss wird die gestellte Aufgabe durch ein Verfahren gelöst, bei dem die Lauge einer Elektrodialyse unter Verwendung von mindestens einer anionen- und/oder mindestens einer kationenpermselektiven Membran und mindestens einer bipolaren, das Wasser dissozierenden Membran unter Bildung einer Alkalilaugenkomponente, welche der Kreislauflauge des Bayer-Prozesses zugeschlagen wird, und einer Verunreinigungskomponente, welche aus dem Prozess entfernt und verworfen wird, unterworfen wird. Die Verunreinigungskompo nente enthält im wesentlichen die anionischen Säurereste der Verunreinigungen aus der verunreinigten Lauge.

Vorteilhafte Weiterbildungen des erfindungsgemässen Verfahrens sind durch die Merkmale der Ansprüche 2 bis 14 gekennzeichnet.

Die Erfindung basiert auf die Anwendung einer bipolaren Membran bei der Elektrodialyse der Alkalilauge aus dem Bayer-Prozess. Es spielt sich dabei die allgemein geschriebene Reaktion

$$MX + H_2O = HX + MOH$$

ab, wobei M Alkali und X der Säurerest bedeuten. Somit bildet sich aus dem Salz als Verunreinigung und Wasser, welches durch die bipolare Elektrode dissoziert wird, Alkalilauge und die entsprechende Säure, indem die in den entsprechenden Zellbereichen durch die selektiven Membranen angereicherten Kationen bzw. Anionen mit den Dissoziationsprodukten des Wassers reagieren. Z.B. können folgende Reaktionen einzeln oder gleichzeitig ablaufen:

$$Na_2CO_3 + H_2O = NaOH + CO_2$$
$$Na_2C_2O_4 + H_2O = NaOH + H_2C_2O_4$$
$$NaCl + H_2O = NaOH + HCl$$
$$Na_2SO_4 + 2H_2O = 2NaOH + H_2SO_4$$
$$NaF + H_2O = NaOH + HF$$

Die Anwendung des erfindungsgemässen Verfahrens ist insbesondere dann von Vorteil, wenn aus den Verunreinigungen gasförmige Reaktionsprodukte entstehen, die sich selbsttätig aus dem weiteren Bayer-Prozess entfernen. Dies ist im besonderen Masse bei der obigen ersten Gleichung der Fall. Weitere Merkmale und Einzelheiten der Erfindung ergeben sich aus der Zeichnung. Diese zeigt schematisch in

Fig. 1 die Aufteilung eines verunreinigten Laugenstroms in einen gereinigten Laugenstorm und einen Strom mit Verunreinigungen,

Figuren 2 bis 6 verschiedene Anordnungen von Elektrodialysezellen

Fig. 7 den Einsatz der Elektrodialysezelle(n) im Bayer-Prozesskreislauf,

Fig. 8 die Kohlendioxidbehandlung mit nachfolgender Feststoffabtrennung und

Fig. 9 die Kreislaufführung der Verunreinigungskomponente.

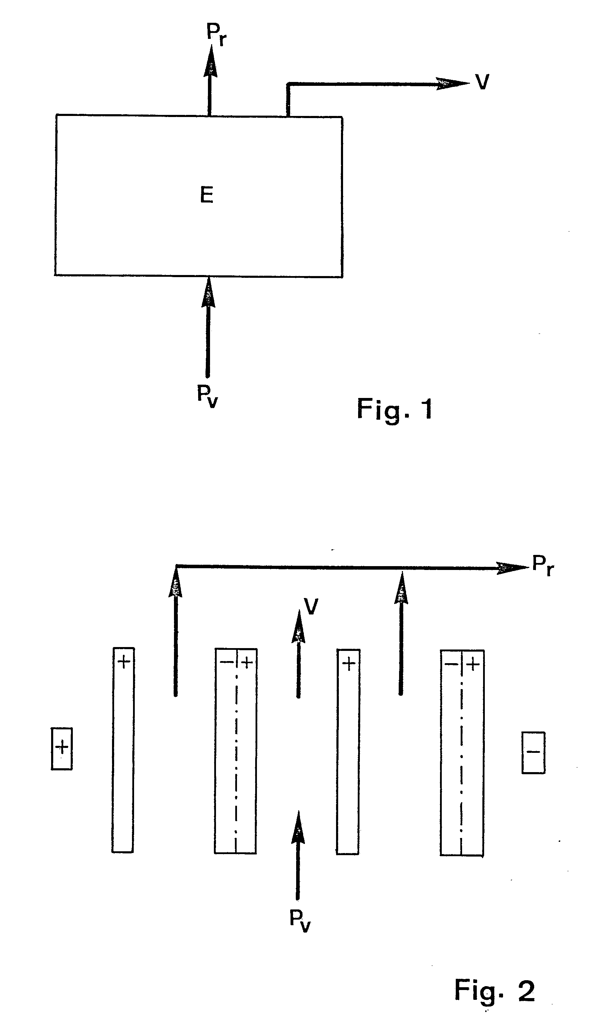

Gemäss der das vereinfachte Grundprinzip der Erfindung zeigenden Fig. 1 wird der mit Verunreinigungen beladene, aus dem Bayer-Prozess stammende Alkalilaugenstrom $P_v$ einer Elektrodialyse unter Verwendung vom mindestens einer Anionen- und/ oder mindestens einer kationenpermselektiven Membran und mindestens einer bipolaren, das Wasser zu dissozieren befähigte Membran unterworfen. Nach der Elektrodialysezelle E erhält man einen an Verunreinigungen verarmten Laugenstrom $P_r$ und einen separaten Strom V, der die Verunreinigungen enthält. Durch mehrmaliges Durchlaufen des Laugenstroms $P_r$ durch die Elektrolysezelle E bzw. bei Einwirkung einer grösseren Anzahl von Einheiten von in Reihe geschalteter Elektrolysezellen auf den Alkalilaugenstrom $P_v$ ist es möglich, eine gereinigte Lauge $P_r$ zu erhalten, deren Verunreinigungen keinen Einfluss mehr auf die nachfolgenden Verfahrensstufen des Bayer-Prozesses haben.

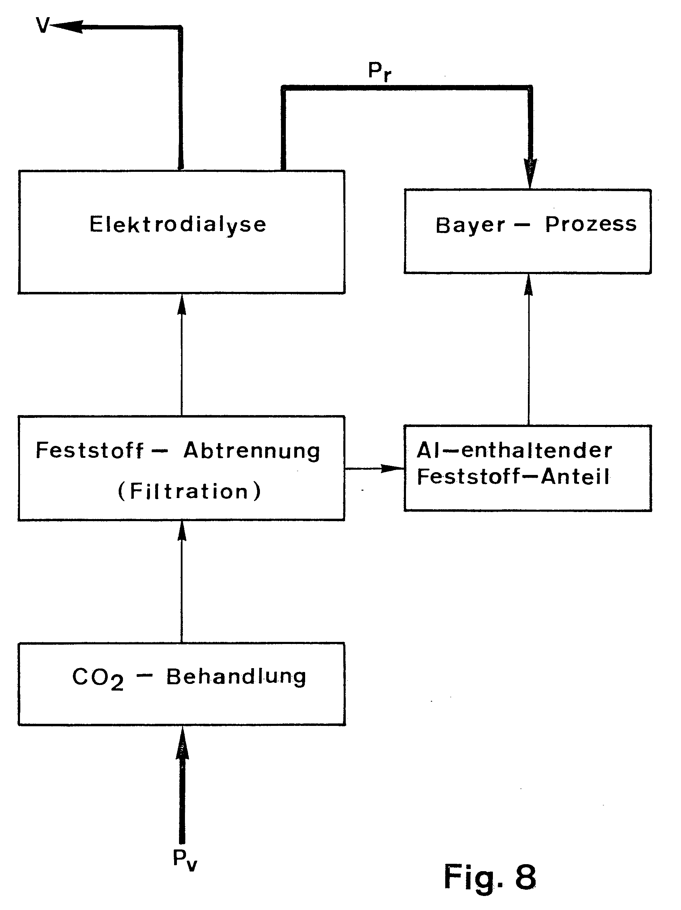

Bevor man die mit Verunreinigungen beladene Lauge $P_v$ der Elektrodialyse unterwirft, kann sie, wie Fig. 8 zeigt, erfindungsgemäss mit Kohlendioxid behandelt -- vorzugsweise wird dabei das gegebenenfalls bei der Durchführung der Elektrodialyse anfallende Kohlendioxid verwendet -- und der anfallende Feststoff abgetrennt werden. Dies geschieht vorteilhaft durch Filtration. Der Aluminium enthaltende Feststoffanteil wird dem Bayer-Prozess zugeführt. Eine weitere erfindungsgemässe Verfahrensvariante besteht darin, dass die in der Verunreinungskomponente V enthaltenen Feststoffanteile, insbesondere die Aluminium enthaltenden Anteile, vorzugsweise Aluminiumhydrat, abgetrennt werden. Die Aluminium enthaltenden Anteile werden vorteilhaft in den Bayer-Prozess rückgeführt.

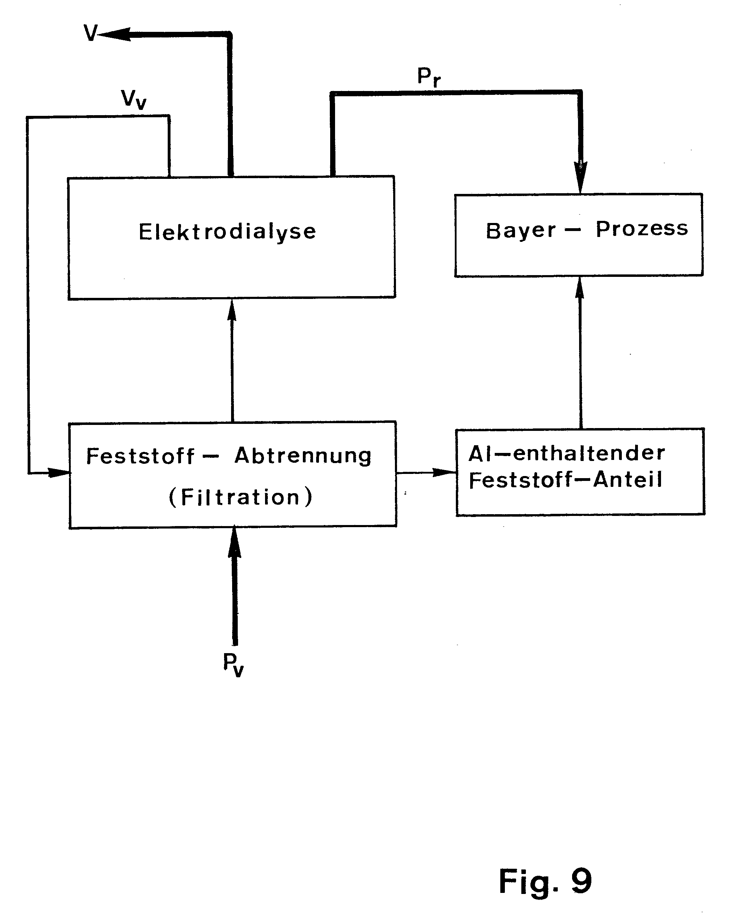

Von besonderem wirtschaftlichem Vorteil ist es, wenn die Verunreinigungskomponente zunächst ein- oder mehrmals im Kreislauf mit eventueller bei jedem Kreislauf erfolgender Feststoffabtrennung -- wie es Fig. 9 zeigt, wo der Kreislaufstrom mit $V_v$ bezeichnet ist -- zugeführt wird, bevor sie als Verunreinigungskomponente V aus dem Prozess entfernt und verworfen wird, da dann in optimaler Weise die eventuell in der Verunreinigunskomponente enthaltenen Alkali- und/oder Aluminiumanteile dem Bayer-Prozess zugeführt werden können.

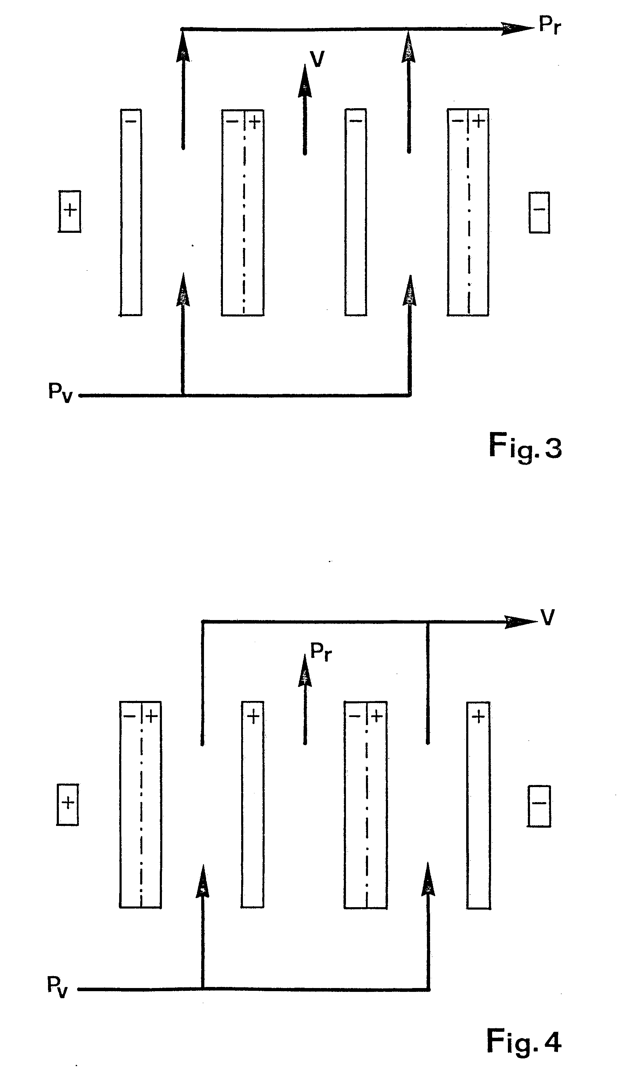

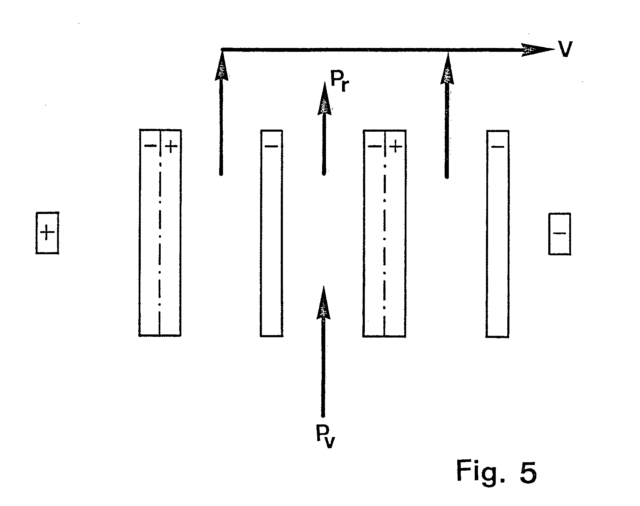

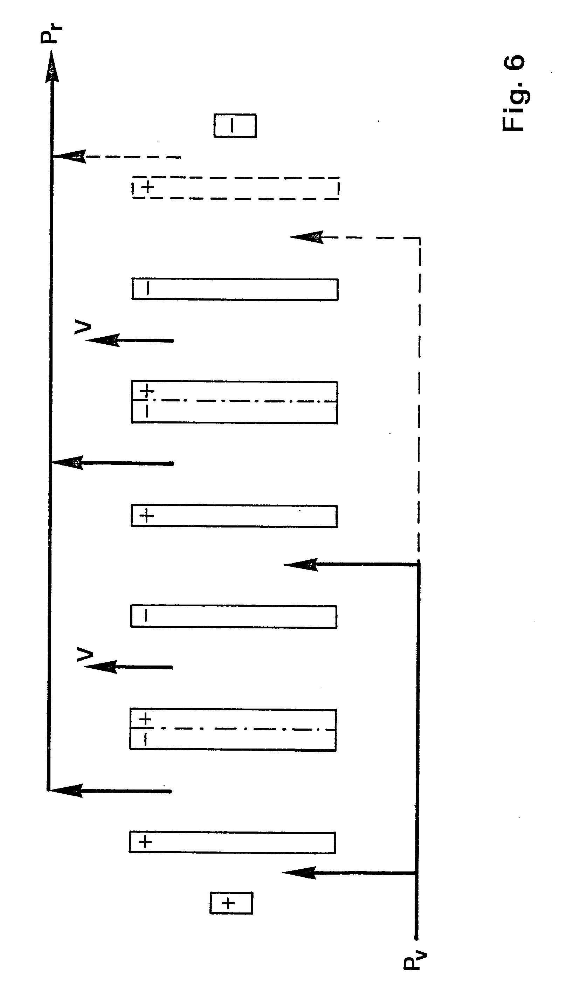

Die Figuren 2 bis 6 zeigen beispielhaft mögliche Anordnungen von Elektrodialyseeinheiten gemäss der Erfindung. Ferner ist mit Pfeilen beispielhaft und schematisch angedeutet, in welchen Zellbereichen die verunreinigte Alkalilauge $P_v$ eingeführt werden kann und aus welchen Zellbereichen entsprechende Reaktionsprodukte $P_r$, V entnommen werden können bzw. wo der/die Strom/Ströme der gereinigten Lauge $P_r$ und der/die Strom/Ströme der Verunreinigungen V anfallen.

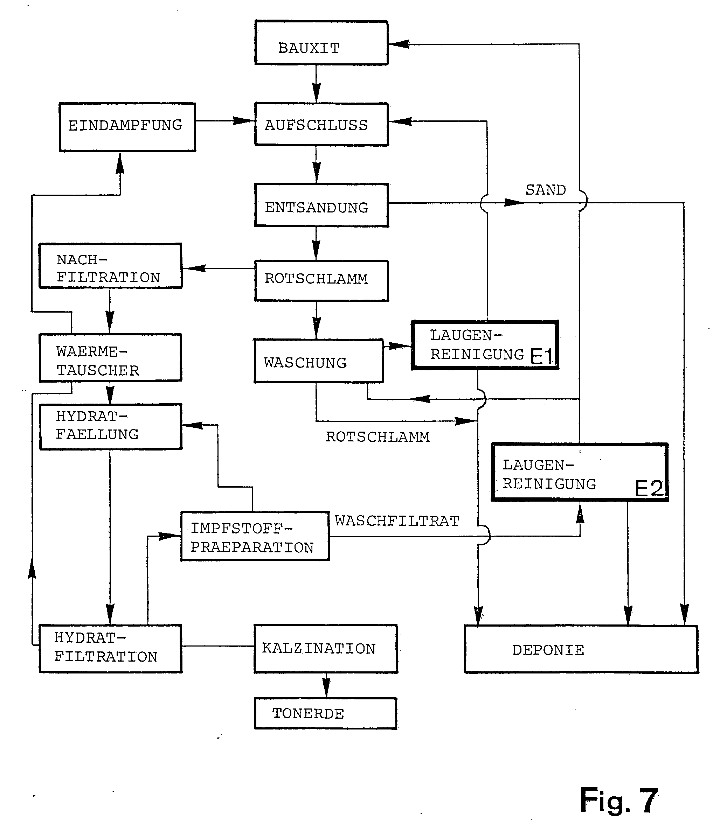

Fig. 7 zeigt in stark vereinfachter Ausführung den Kreislauf der Lauge im Bayer-Prozess und den Einsatz der Elektrodialyse $E_1$ entweder nach der Rotschlammwaschung und/oder den Einsatz der Elektrodialyse $E_2$ nach der Waschung des Impfstoffes. Selbstverständlich kann die Elektrodialyse auch an anderen Orten des Kreislaufprozesses eingesetzt werden. Es hat sich aber gezeigt, dass die vorgenannten Orte besonders bevorzugt sind, da die notwendigen Gerätschaften ohne wesentliche betriebliche Veränderungen an diesen Stellen installiert werden können und andererseits die zu reinigende Lauge verdünnt vorliegt, was der Lebensdauer der Membranen zugute kommt.

**Patentansprüche**

1. Verfahren zur Verringerung der gelösten anorganischen und organischen Verunreinigungen in wässrigen Laugen beim Bayer-Prozess zur Herstellung von Aluminiumhydroxid,

dadurch gekennzeichnet,

dass die Lauge einer Elektrodialyse unter Verwendung von mindestens einer anionenund/oder mindestens kationenpermselektiven Membran und mindestens einer bipolaren, das Wasser dissozierende Membran unter Bildung einer Alkalilaugenkomponente, welche der Kreislauflauge des Bayer-Prozesses zugeschlagen wird, und einer Verunreinigungskomponente, welche aus dem Prozess entfernt und verworfen wird, unterworfen wird.

2. Verfahren nach Anspruch 1, dadurch gekennzeichnet, dass, bevor die Lauge einer Elektrodialyse unterworfen wird, diese mit Kohlendioxid behandelt wird, das dabei ausgefällte Aluminiumhydrat abgetrennt und dem Bayer-Prozess zugeführt wird.

3. Verfahren nach Anspruch 2, dadurch gekennzeichnet, dass das gegebenenfalls bei Durchführung der Elektrodialyse anfallende Kohlendioxid zur Behandlung der Lauge verwendet wird.

4. Verfahren nach Anspruch 1, dadurch gekennzeichnet, dass die in der Verunreinigungskomponente enthaltenen Feststoffanteile, insbesondere die Aluminium enthaltenden Anteile, vorzugsweise Aluminiumhydrat, abgetrennt werden.

5. Verfahren nach Anspruch 4, dadurch gekennzeichnet, dass die abgetrennten Aluminium enthaltenden Anteile, insbe sondere Aluminiumhydrat, in den Bayer-Prozess rückgeführt werden.

6. Verfahren nach Anspruch 4, dadurch gekennzeichnet, dass die Verunreinigungskomponente ein- oder mehrmals der Elektrodialyse unterworden wird, bevor sie aus dem Prozess entfernt und verworfen wird.

7. Verfahren nach Anspruch 1, dadurch gekennzeichnet, dass die Elektrodialyse unter Verwendung mindestens zweier in Reihe geschalteter, aus entweder einer kationen- oder anionenpermselektiver Membran und einer bipolaren Membran bestehender Einheiten durchgeführt wird, wobei dem/den von einer ionenselektiven Membran und einem gleich wie diese geladenen Teil einer bipolaren Membran gebildeten Zellbereich(en) die verunreinigte Lauge zugeführt wird.

8. Verfahren nach Anspruch 7, dadurch gekenneichnet, dass zusätzlich in dem/den aus Anode und/oder Kathode und jeweils benachbarte Membran gebildeter Zellbereich die verunreinigte Lauge zugeführt wird.

9. Verfahren nach Anspruch 7 oder 8, dadurch gekennzeichnet, dass die Elektrodialyse unter Verwendung mindestens zweier in Reihe geschalteter aus einer anionenpermselektiver Membran und einer bipolaren Membran bestehender Einheiten durchgeführt wird, wobei dem/den von einer anionenselektiven Membran und einem anionischen Teil einer bipolaren Membran gebildeten Zellbereich(en) die verunreinigte Lauge zugeführt wird.

10. Verfahren nach Anspruch 1, dadurch gekennzeichnet, dass die Lauge einer Elektrodialyse unter Verwendung einer aus einer der Anode benachbarten kationenpermselektiven und einer anionenpermselektiven Membran und einer dazwischen liegender bipolaren Elektrode bestehenden Ein heit oder mehrere derartige Einheiten unterworfen wird, wobei den von der Anode und der Kathode und den benachbarten ionenpermselektiven Membranen gebildeten Zellbereichen und/oder dem/den von den Anionen- und kationenpermselektiven Membranen gebildeten Zellbereich(en) die verunreinigte Lauge zugeführt wird.

11. Verfahren nach Anspruch 10, dadurch gekennzeichnet, dass zusätzlich zwischen der anionenpermselektiven Membran und der Kathode eine kationenpermselektive Membran eingefügt ist.

12. Verfahren nach einem der Ansprüche 1 bis 11, dadurch gekennzeichnet, dass die Verunreinigungen enthaltende Lauge mindestens teilweise die im Kreislauf des Bayer-Prozesses geführte, nach dem Waschen des Impfstoffs anfallende Lauge ist.

13. Verfahren nach einem der Anspüche 1 bis 12, dadurch gekennzeichnet, dass die Verunreinigungen enthaltende Lauge mindestens teilweise die im Kreislauf des Bayer-Prozesses geführte, nach dem Waschen des Rotschlamms anfallende Lauge ist.

14. Verfahren nach einem der Ansprüche 2 oder 3, dadurch gekennzeichnet, dass das gegebenenfalls bei Durchführung der Elektrodialyse anfallende Kohlendioxid zur Behandlung der Lauge verwendet wird.

Fig. 1

Fig. 2

Fig. 3

Fig. 4

Fig. 5

Fig. 6

EP 0 310 553 A1

Fig. 7

V ←

$P_r$

| Elektrodialyse | | Bayer — Prozess |

| Feststoff — Abtrennung (Filtration) | | Al—enthaltender Feststoff—Anteil |

| $CO_2$ — Behandlung |

$P_v$

Fig. 8

V ←

V$_v$

P$_r$

Elektrodialyse

Bayer — Prozess

Feststoff — Abtrennung

(Filtration)

Al—enthaltender
Feststoff—Anteil

P$_v$

**Fig. 9**